(19) Europäisches Patentamt
European Patent Office
Office européen des brevets

(11) Numéro de publication: **0 124 437**
**B1**

(12) **FASCICULE DE BREVET EUROPÉEN**

(45) Date de publication du fascicule du brevet: **04.11.87**

(51) Int. Cl.⁴: **B 29 D 11/00**

(21) Numéro de dépôt: **84400838.3**

(22) Date de dépôt: **25.04.84**

(54) **Fibres optiques en matière plastique et leur procédé de fabrication.**

(30) Priorité: **03.05.83 FR 8307348**

(43) Date de publication de la demande:
**07.11.84 Bulletin 84/45**

(45) Mention de la délivrance du brevet:
**04.11.87 Bulletin 87/45**

(84) Etats contractants désignés:
**DE GB IT SE**

(56) Documents cité:
**DE-A-1 497 545**
**DE-A-2 655 382**
**US-A-3 830 460**
**US-A-4 069 280**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Allemand, Louis René, 18, rue Mozart, F-91470 Limours (FR)**
Inventeur: **Calvet, Jean, 15 rue Dussoubs, F-75002 Paris (FR)**
Inventeur: **Cavan, Jean- Claude, 31 rue Leroyer, F-94300 Vincennes (FR)**
Inventeur: **Goldwasser, Maurice, 50 rue Prosper Legouté, F-92160 Antony (FR)**
Inventeur: **Thevenin, Jean- Claude, 54 rue de Villacoublay, F-78140 Velizy- Villacoublay (FR)**

(74) Mandataire: **Mongrédien, André, c/o BREVATOME 25, rue de Ponthieu, F-75008 Paris (FR)**

**EP 0 124 437 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention a pour objet des fibres optiques en matière plastique et leur procédé de fabrication. Ces fibres sont utilisées pour la transmission optique, notamment dans les domaines de la médecine, des télécommunications, de l'automobile, de l'océanique, de la visualisation, de la décoration, de la physique des particules.

Ces fibres optiques sont généralement formées d'un premier matériau constituant le coeur de la fibre et d'un second matériau, entourant le premier, et constituant la gaine de la fibre. Le matériau de coeur dans lequel se propage l'énergie lumineuse utile, doit présenter de bonnes caractéristiques de transmission de la lumière; il présente un indice de réfraction supérieur à celui du matériau de gaine.

Dans de telles fibres optiques, la lumière se propage par réflexion totale à l'interface coeur-gaine; ce type de propagation permet de transmettre des quantités de lumière d'autant plus grandes que la différence entre les indices de réfraction du matériau de coeur et du matériau de gaine est plus grande.

Comme matériau de coeur, on utilise généralement du verre ou de la silice, ces matériaux présentant de bonnes caractéristiques de transmission optiques. Cependant, ces fibres ont l'inconvénient d'être chères, lourdes et relativement peu flexibles. Aussi, au cours de ces dernières années, diverses tentatives ont été faites pour fabriquer des fibres optiques en matière plastique.

Les fibres en matière plastique connues jusqu'à ce jour sont constituées par des matériaux transparents du type amorphe comme par exemple le polyméthacrylate de méthyle, connu sous l'abréviation PMMA.

Ce matériau est généralement utilisé comme matériau de coeur.

En effet, le PMMA possède une transparence élevée et une bonne flexibilité. Cependant, il présente un indice de réfraction relativement bas (1,48-1,50), ce qui nécessite l'emploi de matériau de gaine de faible indice de réfraction. Or, les polyméres de faible indice sont extrémement rares. Les polymères utilisables sont les polymères fluorés tels que le polyméthacrylate de 2,2,2 tri-fluoroéthyle; il présente un indice de réfraction voisin de 1,41.

Des fibres optiques constituées de ce matériau comme matériau de gaine et du PMMA comme matériau de coeur ainsi que leur procédé de fabrication ont été décrits dans un brevet japonais n° 568 321 (année 1981).

D'autres composés fluorés utilisables comme matériau de gaine, le PMMA étant utilisé comme matériau de coeur sont décrits dans le brevet français n° 2 493 997.

Malheureusement, le procédé de fabrication de ces fibres par coextrusion par filière double comporte des défauts, usure de la filière et accrochage d'impuretés, ce qui entraîne la détérioration de la surface de réflexion totale et le risque d'une fibre de qualité médiocre en production industrielle.

Comme autre matériau de coeur couramment employé, on peut citer le polystyrène. Ce matériau présente l'avantage de posséder un indice de réfraction élevé (1,58-1,62). Un exemple de fibres optiques utilisant un tel matériau de gaine est illustré dans l'article J. Appl. Phys. 52 (2) de décembre 1981 pages 7061-7063, intitulé "Low-loss polystyrene core-optical fibers". Dans cet exemple, le matériau de gaine utilisé est un copolymère d'acétate de vinyle et d'éthylène.

Malheureusement, ces fibres optiques présentent des propriétés mécaniques médiocres.

On connaît par ailleurs, par le document US-A-4 069 260, un procédé de fabrication de fibres optiques en matière plastique dans lequel on réalise une gaine sous la forme d'un cylindre et un barreau cylindrique constituant le coeur des gaines, on soumet la gaine à un traitement thermique, on introduit le barreau cylindrique dans la gaine, on met sous vide et on étire la préforme obtenue.

La présente invention a notamment pour objet des fibres optiques en matière plastique permettant en particulier de remédier aux inconvénients ci-dessus. Selon l'invention, les fibres optiques comprenant un coeur et une gaine se caractérisent en ce que la gaine est constituée d'un copolymère de styrène et de méthacrylate de méthyle, et le coeur est constitué du polymère d'un composé de formule:

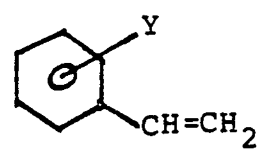

dans laquelle Y représente l'hydrogène ou un radical alkyle, tout ou partie des atomes d'hydrogène du composé pouvant être remplacé par des atomes de deutérium.

De préférence, le composé utilisé est du styrène.

Les copolymères constituant la gaine présentent une très grande transparence à la lumière (dans le spectre visible entre 400 et 700 nm). Par ailleurs, ils présentent un indice de réfraction allant de 1,49 à 1,59 suivant la proportion de styrène et de méthacrylate de méthyle.

De préférence, le copolymère constituant la gaine comprend au moins 10 % en moles de styrène. Par exemple, il peut être obtenu par polymérisation du mélange azéotropique du styrène et du méthacrylate de méthyle. Ce copolymère présente un indice de réfraction de 1,54.

Les matériaux de coeur présentent des indices de réfraction élevés; pour le polystyrène l'indice de réfraction est de 1,58-1,62. Ce composé

possède une excellente transparence.

L'emploi d'un copolymère de styrène et de méthacrylate de méthyle, comme matériau de gaine, et du polystyrène, comme matériau de coeur, permet, compte tenu des indices de réfraction relativement proches de ces matériaux, d'obtenir des fibres optiques monomodes dont les applications sont nombreuses.

Dans les fibres optiques à saut d'indice, on sait que plus le saut d'indice est faible plus la bande passante de ces fibres peut être grande, mais plus l'ouverture numérique est petite.

Suivant les applications envisagées, il peut donc être intéressant de disposer d'une fibre optique adaptée aux besoins, c'est-à-dire une fibre optique présentant une ouverture maximum, liée à une meilleure adaptation aux composants d'entrée et de sortie de la fibre, tout en ayant une bande passante adaptée à la fréquence du signal lumineux à transmettre. On rappelle que la fréquence du signal est essentiellement limitée par la différence de chemin optique entre le rayon lumineux axial et le rayon lumineux au voisinage de la réflexion totale.

Les fibres optiques selon l'invention permettent de réaliser cette adaptation. En effet, le saut d'indice peut être plus ou moins grand suivant les matériaux employés et l'ouverture angulaire de la lumière transmise peut varier de $\pm 35°$ à 0°.

Par ailleurs, les copolymères de styrène et de méthacrylate de méthyle présentent un bon pouvoir d'adhérence vis-à-vis des matériaux de coeur et en particulier lorsque celui-ci est un polystyrène; ceci est très important pour obtenir une bonne qualité de l'interface coeur-gaine ainsi qu'une bonne qualité des fibres en transparence.

De plus, l'emploi de ces polymères de coeur et de gaine permet d'obtenir des fibres optiques en matière plastique, présentant d'excellentes propriétés mécaniques. Ces fibres sont particulièrement solides et manipulables avec beaucoup moins de précautions que les fibres de l'art antérieur.

L'invention a encore pour objet un procédé de fabrication de fibres optiques en matière plastique, notamment de celles décrites précédemment, qui consiste à réaliser l'étirage d'une préforme constituée d'un barreau de coeur à l'état solide.

Selon l'invention, ce procédé qui comprend les étapes suivantes:

(a)- réalisation d'une gaine, sous la forme d'un cylindre plein comportant au moins un logement cylindrique,

(b)- réalisation d'au moins un barreau cylindrique constituant le coeur des fibres,

(c)- réalisation d'un traitement thermique,

(d)- introduction du barreau cylindrique dans le logement,

(e)- mise sous vide, et

(f)- étirage de la préforme obtenue,

se caractérise en ce que, le barreau présentant un diamètre inférieur à celui du logement, on met sous vide l'intervalle défini entre le barreau et le cylindre, et en ce que le traitement thermique réalisé entre les étapes (e) et (f) consiste en une élévation de la température de l'ensemble afin de ramollir le cylindre et de le plaquer contre le barreau, sous l'effet de la pression extérieure.

Les étapes (d) (c) et (f) peuvent être réalisées en continu en une seule opération, au cours de l'étirage, les deux éléments de la préforme étant maintenus sous vide.

Par ailleurs, le procédé, contrairement aux procédés de l'art antérieur, permet d'éviter toute contrainte dans la gaine des fibres optiques obtenues.

Ce procédé permet de faire varier commodément l'épaisseur de la gaine et donc d'obtenir des fibres présentant des gaines de forte épaisseur et ayant subi un monoétirage moléculaire, donc de bonnes performances mécaniques. Il permet aussi de réaliser des fibres monomodes.

Par ailleurs, ce procédé permet d'obtenir des fibres dont l'interface coeur-gaine est de meilleure qualité que celle des fibres réalisées selon les procédés de fabrication de l'art antérieur (voir brevet français cité précédemment).

La qualité de cette interface peut être rendue optimale, conformément à l'invention, en polissant les faces en regard du barreau et du cylindre devant être plaquées l'une contre l'autre. Un traitement thermique du barreau de coeur et de la gaine peut être effectué pour éliminer les tensions mécaniques éventuellement apparues lors de la polymérisation ou des usinages.

D'autres caractéristiques et avantages de l'invention apparaitront mieux à la lecture de la description qui va suivre, donnée à titre illustratif et non limitatif, en références aux figures 1 à 3, annexées, illustrant schématiquement les différentes étapes du procédé de fabrication de fibres optiques, selon l'invention.

Selon l'invention, le matériau de gaine des fibres optiques est constitué principalement d'un copolymère de styrène et de méthacrylate de méthyle. La quantité relative des deux monomères est fonction de l'application envisagée. De façon avantageuse, ce copolymère comprend au moins 10 % en moles de styrène. La proportion peut être par exemple celle du mélange azéotropique des deux monomères dans les conditions de polymérisation. Par ailleurs, le matériau de coeur est constitué de préférence par le polymère d'un composé de formule:

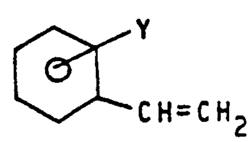

dans laquelle Y représente l'hydrogène ou un radical alkyle comme par exemple $CH_3$.

Afin de diminuer les résonances des liaisons C-H, qui sont une cause d'absorption de la lumière

dans les fibres, tout ou partie des hydrogènes du polymère peuvent être remplacé par des deutériums. Ceci peut être particulièrement intéressant, notamment du point de vue commercial, pour des fibres optiques de petits diamètres, c'est-à-dire pour des fibres dont le diamètre du coeur est inférieur à 150 µm.

Lorsque Y représente l'hydrogène, on peut par exemple substituer 5 ou 8 hydrogènes par des deutériums, les composés correspondant respectivement aux formules:

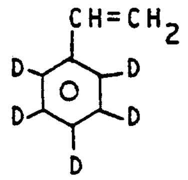

et

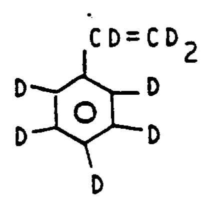

Ces fibres optiques peuvent être des fibres optiques monocoeur ou bien des fibres multicoeurs. Ces fibres multicoeurs sont constituées d'un cylindre plein, formant la gaine, comportant plusieurs logements cylindriques et parallèles entre eux et de plusieurs barreaux cylindriques, formant les coeurs, chaque barreau étant situé dans un des logements pratiqués dans le cylindre. Ces fibres constituent des fibres multivoies.

A titre d'exemple, on décrit ci après, en référence aux figures 1 à 3, la fabrication d'une fibre optique monocoeur dont le matériau de coeur est le polystyrène (Y=H). Bien entendu, ce procédé de fabrication est applicable à tout autre matériau de coeur, notamment aux polyvinyltoluènes (Y=$CH_3$) et à des matériaux de coeur constitués de polymères deutérés. Par ailleurs, ce procédé est applicable à des fibres optiques multicoeurs.

Les premières étapes du procédé consistent à réaliser une préforme 1 (figure 2) formée d'un coeur 2 en polystyrène et d'une gaine 4 en un copolymère de styrène et de méthacrylate de méthyle. Les deux éléments constitutifs d'une fibre optique, le coeur et la gaine, sont réalisés séparément en matériau polymérisé. Cette réalisation séparée permet notamment de faire varier aisément l'épaisseur de la gaine.

Le coeur d'une fibre selon l'invention est obtenue à partir d'un barreau cylindrique 2 en polystyrène. Ce barreau 2 est obtenu en polymérisant dans une ampoule de verre, scellée sous vide après dégazage, du styrène pur; la purification du styrène peut être réalisée par une distillation sous basse pression et à faible température (40° C environ), en présence de gaz neutre (azote ou argon), et en éliminant les produits obtenus en début et en fin de distillation. La polymérisation est poursuivie en masse, par chauffage, notamment en plaçant l'ampoule dans une étuve selon un cycle thermique adéquat s'étendant sur 4 jours de 90° C à 170° C par exemple, pendant 24 heures à 90° C, puis pendant 24 autres heures à 170° C. Après retour à l'ambiante, l'ampoule est brisée.

Un recuit après démoulage à environ 80° C peut être effectué pour éliminer les contraintes mécaniques apparues lors de la polymérisation. Le recuit peut ensuite être suivi d'un polissage de la surface du barreau, par voie mécanique ou chimique, ou bien d'un glaçage de surface du barreau 2, c'est-à-dire d'un passage du barreau au four à infrarouge, à une température de l'ordre de 160° C, afin de produire une fusion de surface. Ceci permet d'obtenir un barreau 2 de polystyrène dont la surface est quasi parfaite.

De même la gaine d'une fibre, selon l'invention, est obtenue à partir d'un tube 4 ou d'un cylindre plein en copolymère de styrène et de méthacrylate de méthyle comportant un logement 5. Ce tube 4, par exemple fermé à une extrémité 6 est obtenu de la manière suivante: on copolymérise du styrène et du méthacrylate de méthyle purs (purification comme précédemment) par exemple dans un tube scellé sous vide après dégazage, ce qui conduit à un barreau cylindrique; on perce ce barreau par usinage. La quantité relative du styrène et du méthacrylate de méthyle dépend de l'utilisation ultérieure de la fibre optique obtenue.

Afin de favoriser la copolymérisation on peut éventuellement incorporer au mélange initial des agents de polymérisation tels que le peroxyde de benzoyle, ou azo bis, bis isobutyronitrile ou des plastifiants comme par exemple le dibutylphtalate, le dioctylphtalate ou le butylmercaptan. Ces adjuvants sont en particulier nécessaires lorsque la concentration en méthacrylate de méthyle est importante, c'est-à-dire supérieure à 70 %.

La copolymérisation est poursuivie en masse en plaçant le tube dans une étuve selon un cycle thermique adéquat s'étendant sur 4 jours de 90° C à 140° C par exemple, pendant 24 heures à 90° C et pendant 24 autres heures à 140° C. Après retour à l'ambiante, le tube est brisé.

Comme précédemment, un recuit après démoulage à environ 90° C peut être effectué. Ce recuit peut être suivi d'un polissage, par voie mécanique ou chimique de l'intérieur du tube 4 en matériau de gaine afin d'obtenir une surface interne quasi parfaite.

Les ébauches de coeur 2 et de gaine 4 étant réalisés, on introduit (figure 1) le barreau de coeur 2 dans le tube de gaine 4 ou plus exactement dans le logement 5; ceci ne peut bien entendu être réalisé que si le diamètre du barreau 2 est inférieur au diamètre interne du tube 4. L'intervalle 8 défini entre le barreau 2 et le tube 4 est ensuite mis sous vide. Ceci peut être réalisé au moyen d'une ventouse 10, s'appuyant

sur l'éxtrémité 12 du tube de gaine 4, reliée à une pompe à vide 13 de type classique. Ce système de mise sous vide de l'intervalle 8 permet d'éviter l'emploi d'une enceinte à vide dans laquelle serait logée la préforme.

A cet effet le logement 5 usiné dans le cylindre 4 de copolymère styrène-méthacrylate de méthyle peut ne pas déboucher (figures 1 et 2); il peut aussi déboucher et être fermé par un bouchon en vue de la mise sous vide.

Après la mise sous vide, on élève progressivement la température de l'ensemble jusqu'aux environs de 100 à 120° C, au moyen d'un four. Cette élévation de température, conduisant à un ramollissement de la gaine, permet de plaquer (figure 2) le tube de gaine 4 en contact parfait avec le barreau de coeur 2 sous l'effet de la pression extérieure par exemple la pression atmosphérique, schématisée par les flèches 14.

Le fait de réaliser une préforme 1 (figure 2), comme ci-dessus, permet, lors des opérations suivantes du procédé de protéger l'interface coeur-gaine de la fibre optique. Ceci permet d'obtenir des fibres optiques présentant une bonne qualité d'interface.

L'étape suivante du procédé consiste à étirer lentement la préforme ainsi obtenue en la chauffant dans un four. Par exemple, la préforme obtenue descend à une vitesse de 2 cm/min. dans un four à deux étages 16, comprenant une colonne de préchauffe 18, constituant le premier étage, et une zone de chauffage par rayonnement infrarouge et par balayage d'azote chaud, constituant le deuxième étage 20. La préchauffe permet d'atteindre une température voisine de la température d'étirage de l'ordre de 200° C. Les infrarouges permettent un chauffage localisé et homogène jusqu'au centre de la préforme. L'azote chaud permet de contrôler la température de surface. Avec ce type de four, des préformes de grand diamètre, c'est-à-dire de l'ordre de 56 mm de diamètre, ont été étirées.

Il est à noter que cette étape d'étirage peut être réalisée de façon quasi-simultanée, c'est-à-dire en continu, avec l'étape de plaquage du tube de gaine sur le barreau de coeur.

Etant donné que la viscosité des copolymères de styrène et de méthacrylate de méthyle est plus grande à la température de filage, la gaine subit au cours de l'étirage de la fibre, un monoétirage moléculaire qui lui confère, donc confère à la fibre d'excellentes qualités mécaniques: la structure moléculaire de la gaine subit un étirage au niveau moléculaire, et dans une seule direction, cette situation restant figée au cours du refroidissement. Il n'en est pas de même pour le coeur dont la fluidité initiale et le refroidissement plus lent permettent le rétablissement d'une structure non étirée.

Il est à noter que le polyméthacrylate de méthyle pur, ne peut être étiré que si on y incorpore des plastifiants tels que le dibutylphtalate, le dioctylphtalate ou le butylmercaptan. L'emploi d'un copolymère de styrène et de méthacrylate de méthyle, conformément à l'invention, permet, pour des concentrations de méthacrylate de méthyle inférieure à 70 % en moles d'obtenir des fibres optiques par étirage et ce sans adjuvant.

La fibre optique ainsi obtenue peut être par la suite recouverte d'une gaine mécanique de protection.

Avec un tel procédé de fabrication, il a été obtenu des fibres optiques cylindriques et régulières monocoeurs de 0,2 à 1 mm de diamètre, ces valeurs n'étant pas limitatives. Ces fibres présentent des valeurs de transmission de la lumière comparables ou supérieures à celles des fibres optiques en matière plastique de l'art antérieur. De plus, ces fibres possèdent d'excellentes propriétés mécaniques ainsi qu'une grande bande passante.

Ce procédé permet aussi de fabriquer des fibres multivoies ou multicoeurs. Des fibres optiques de 300 µm de diamètre avec trois voies de 100 µm ou bien de 60 µm de diamètre avec trois voies de 20 µm peuvent être obtenues.

## Revendications

1. Fibres optiques en matière plastique comprenant un coeur et une gaine, caractérisées en ce que la gaine (4) est constituée d'un copolymère de styrène et de méthacrylate de méthyle et le coeur (2) est constitué d'un polymère d'un composé de formule:

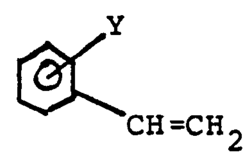

dans laquelle Y représente l'hydrogène ou un radical alkyle, ou dans lequel toute ou partie des atomes d'hydrogène est remplacée par des atomes de deutérium.

2. Fibres optiques selon la revendication 1, caractérisées en ce que le copolymère comprend au moins 10 % en moles de styrène.

3. Fibres optiques selon la revendication 1 ou 2, caractérisées en ce que ledit composé est le styrène.

4. Procédé de fabrication de fibres optiques en matière plastique, comportant les étapes suivantes:

(a) - réalisation d'une gaine, sous la forme d'un cylindre plein (4) comportant au moins un logement cylindrique (5),

(b) - réalisation d'au moins un barreau cylindrique (2) constituant le coeur des fibres,

(c) - réalisation d'un traitement thermique,

(d) - introduction du barreau cylindrique (2) dans le logement (5),

(e) - mise sous vide, et

(f) - étirage de la préforme (1) obtenue, caractérisé en ce que le barreau présentant un

diamètre inférieur à celui du logement, on met sous vide l'intervalle (8) défini entre le barreau (2) et le cylindre (4), et en ce que le traitement thermique, réalisé entre les étapes (e) et (f) consiste en une élévation de la température de l'ensemble afin de ramollir le cylindre (4) et de le plaquer contre le barreau (2), sous l'effet de la pression extérieure (14).

5. Procédé de fabrication selon la revendication 4, caractérisé en ce que la mise sous vide dudit intervalle (8) est réalisée au moyen d'une ventouse (10), s'appuyant sur l'une des extrémités (12) du cylindre (4), connectée à une pompe à vide (13).

6. Procédé de fabrication selon l'une quelconque des revendications 5 et 6, caractérisé en ce que, avant l'étape (d), on polit les faces en regard du barreau (2) et du cylindre (4) devant être plaquées l'une contre l'autre.

7. Procédé de fabrication selon l'une quelconque des revendications 4 à 6, caractérisé en ce que l'on réalise la gaine (4) par copolymérisation du styrène et du méthacrylate de méthyle.

8. Procédé de fabrication selon la revendication 7, caractérisé en ce que l'on réalise la copolymérisation en présence d'agent de polymérisation ou de plastifiant.

9. Procédé de fabrication selon l'une quelconque des revendications 4 à 8, caractérisé en ce que l'on réalise le coeur (2) par polymérisation d'un composé de formule:

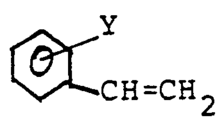

dans laquelle Y représente l'hydrogène ou un radical alkyle, ou dans lequel tout ou partie des atomes d'hydrogène est remplacé par des atomes de deutérium.

10. Procédé de fabrication selon la revendication 9, caractérisé en ce que ledit composé est le styrène.

11. Procédé de fabrication selon la revendication 8 ou 10,caractérisé en ce que la polymérisation est suivie d'un traitement thermique.

**Patentansprüche**

1. Optische Fasern aus Plastikmaterial, bestehend aus einem Kern und einem Mantel, dadurch gekennzeichnet, daß der Mantel (4) aus einem Styrolcopolymer und aus Methylmethacrylat besteht und der Kern (2) aus einem Polymer einer Verbindung der Formel

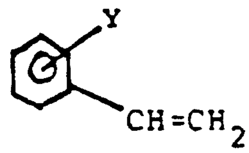

besteht, in welcher Y Wasserstoff oder ein Alkylradikal darstellt oder in welchem alle oder ein Teil der Wasserstoffatome öurch Deuteriumatome ersetzt sind.

2. Optische Fasern nach Anspruch 1, dadurch gekennzeichnet, daß das Copolymer wenigstens 10 Mol% Styrol enthält.

3. Optische Fasern nach Anspruch 1 oder 2, dadurch gekennzeichnet, daß die Verbindung Styrol ist.

4. Herstellungsverfahren für optische Fasern aus Plastikmaterial, enthaltend die folgenden Schritte:

(a) Erzeugen eines Mantels in Form eines vollen Zylinders (4), der wenigstens einen zylindrischen Hohlraum (5) enthält,

(b) Erzeugen wenigstens eines zylindrischen Stabes (2), der den Faserkern bildet,

(c) Ausführung einer thermischen Behandlung,

(d) Einführung des zylindrischen Stabes (2) in den Hohlraum (5),

(e) Evakuieren, und

(f) Ausziehen des erhaltenen Vorformlings (1), dadurch gekennzeichnet, daß der Stab einen Durchmesser aufweist, der kleiner als der des Hohlraums ist, daß man den Zwischenraum (8) zwischen den Stab (2) und dem Zylinder (4) evakuiert und daß die thermische Behandlung, die zwischen den Schritten (e) und (f) liegt, aus einer Erhöhung der Temperatur der Anordnung besteht, um den Zylinder (4) zu erweichen und ihn auf den Stab (2) unter dem Einfluß des äußeren Drucks (14) zu drücken.

5. Herstellungsverfahren nach Anspruch 4, dadurch gekennzeichnet, daß man die Evakuierung des genannten Zwischenraurs (8) mittels einer Saugglocke (10) ausführt, die sich an die einen Enden (12) des Zylinders (4) anlegt und die mit einer Saugpumpe (13) verbunden ist.

6. Herstellungsverfahren nach einen der Ansprüche 4 und 5, dadurch gekennzeichnet, daß man vor dem Schritt (d) die einander gegenüberstehenden Flächen des Stabes (2) und des Zylinders (4) poliert, bevor sie gegeneinandergedrückt werden.

7. Herstellungsverfahren nach einem der Ansprüche 4 bis 6, dadurch gekennzeichnet, daß man den Mantel (4) durch Copolymerisation von Styrol und Methylmethacrylat herstellt.

8. Herstellungsverfahren nach Anspruch 7, dadurch gekennzeichnet, daß man die Copolymerisation in Anwesenheit eines Polymerisationsmittels oder eines Plastifizierungsmittels ausführt.

9. Herstellungsverfahren nach einem der Ansprüche 4 bis 8, dadurch gekennzeichnet, daß man den Kern (2) durch Polymerisation einer

Verbindung der Formel:

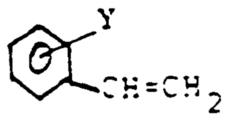

ausführt, in der Y Wasserstoff oder ein Alkylradikal darstellt oder in dem alle oder ein Teil der Wasserstoffatome durch Deuteriumatome ersetzt sind.

10. Herstellungsverfahren nach Anspruch 9, dadurch gekennzeichnet, daß die genannte Verbindung Styrol ist.

11. Herstellungsverfahren nach Anspruch 9 oder 10, dadurch gekennzeichnet, daß die Polynerisation von einer therrischen Behandllng gefolgt wird.

**Claims**

1. Plastic optical fibres comprising a core and a sheath, characterized in that the sheath (4) is constituted by a styrenemethyl methacrylate copolymer and the core (2) is constituted by a polymer of a compound of formula:

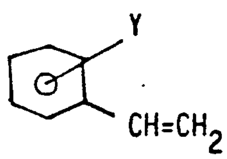

in which Y represents hydrogen or an alkyl radical, or in which all or part of the hydrogen atoms is replaced by deuterium atoms.

2. Optical fibres according to claim 1, characterized in that the copolymer comprises at least 10 mole % of styrene.

3. Optical fibres according to claims 1 or 2, characterized in that said compound is styrene.

4. Process for the production of plastic optical fibres comprising the following stages:

(a) forming a sheath, in the form of a solid cylinder (4) with at least one cylindrical recess (5),

(b) forming at least one cylindrical rod (2) ccnstituting the core of the fibres,

(c) carrying out a heat treatment,

(d) introducing the cylindrical rod (2) into the recess (5),

(e) placing under vacuum and

(f) drawing the preform (1) obtained,

characterized in that as the rod has a smaller diameter than the recess, the gap (8) defined between the rod (2) and the cylinder (4) is placed under vacuum and in that the heat treatment performed between stages (e) and (f) consists of raising the temperature of the assembly in order to soften the cylinder (4) and engage it against the rod (2), under the effect of the external pressure (14).

5. Production process according to claim 4, characterized in that the gap (8) is placed under vacuum by means of a suction cup (10) bearing on one of the ends (12) of cylinder (4) connected to a vacuum pump (13).

6. Production process according to any one of the claims 5 and 6, characterized in that prior to stage (d), the facing faces of rod (2) and cylinder (4) which are to be engaged with one another are polished.

7. Production process according to any one of the claims 4 to 6, characterized in that sheath (4) is produced by the copolymerization of styrene and methyl methacrylate.

8. Production process according to claim 7, characterized in that copolymerizaticn is carried out in the presence of a polymerizing agent or plasticizer.

9. Production process according to any one of the claims 4 to 8, characterized in that core (2) is produced by polymerizing a compound of formula.

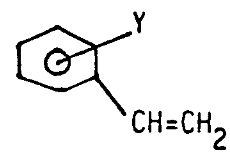

in which Y represents hydrogen or an alkyl radical, or in which all or part of the hydrogen atoms is replaced by deuterium atoms.

10. Production process according to claim 9, characterized in that said compound is styrene.

11. Production process according to claims 9 or 10, characterized in that the polymerization is followed by a heat treatment.

FIG. 1

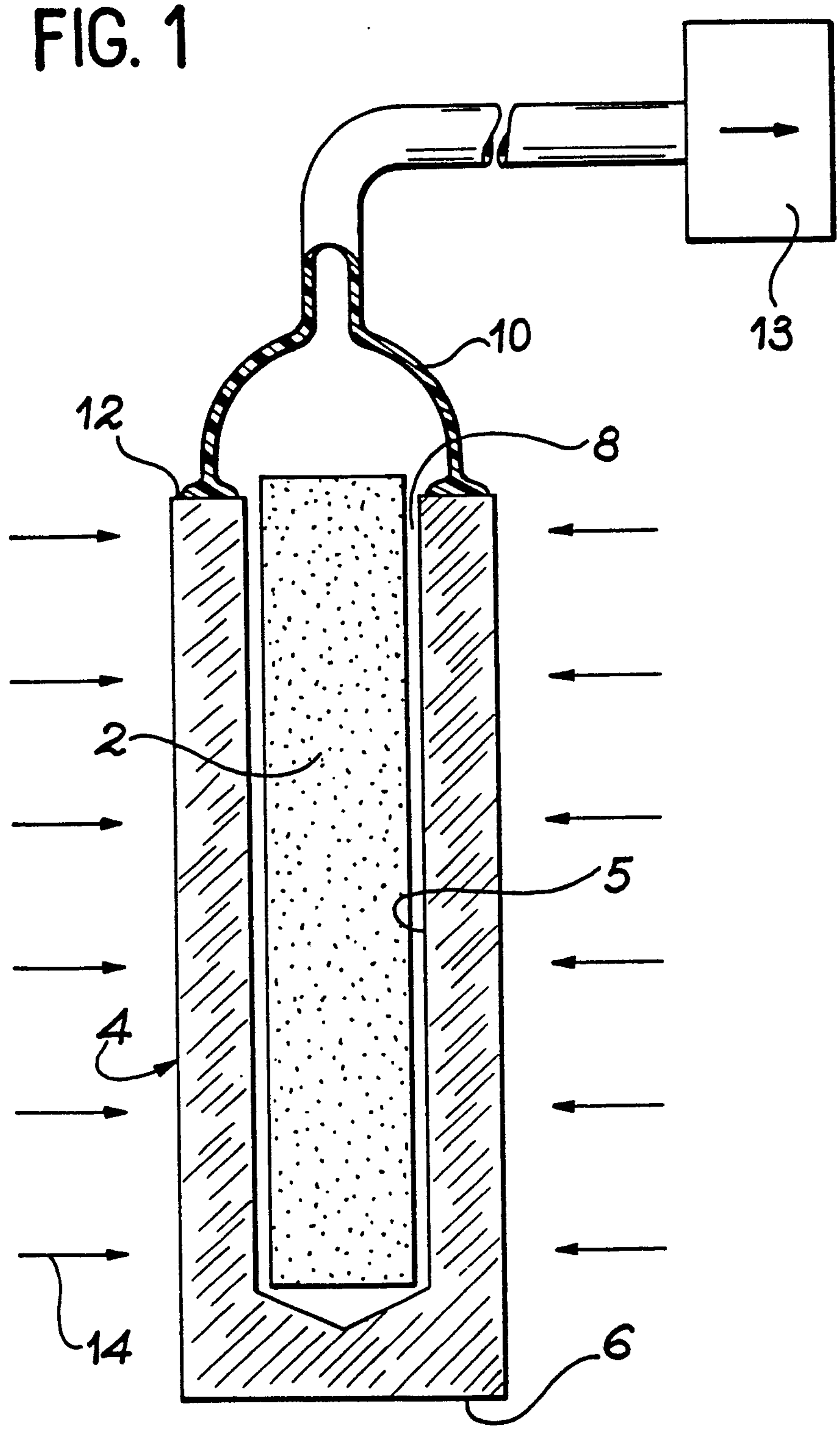

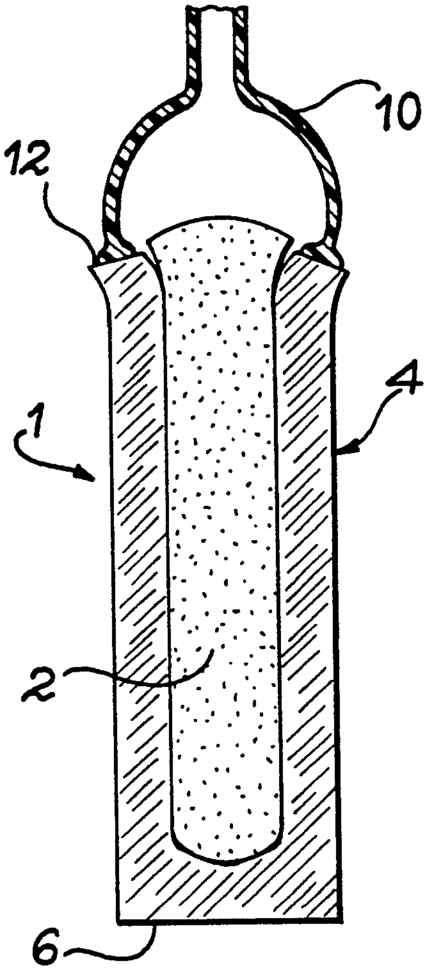


FIG. 2

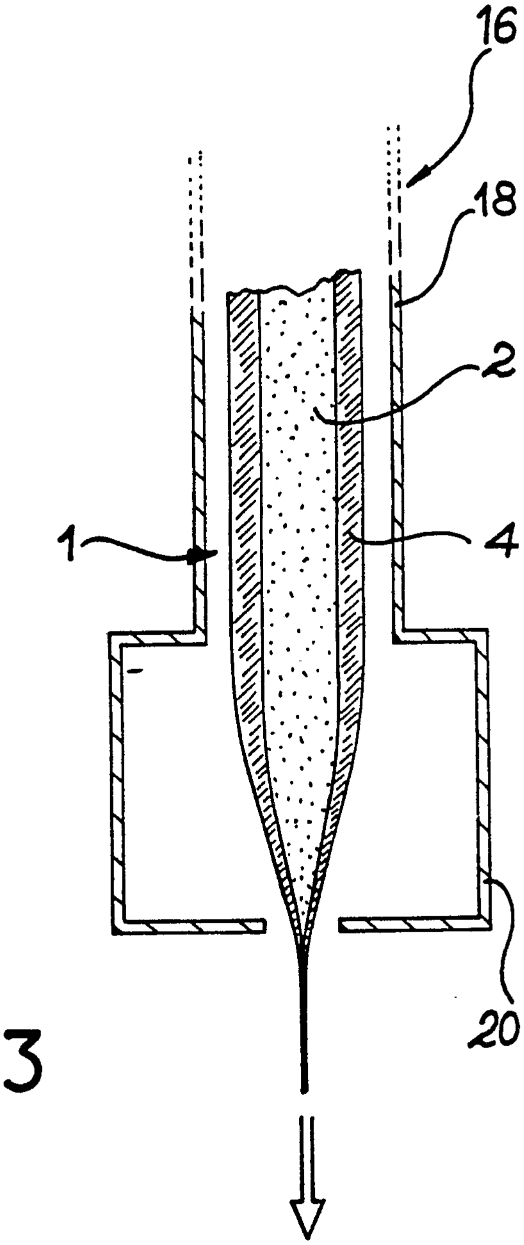


FIG. 3